# EUROPEAN PATENT APPLICATION

(11) **EP 3 621 012 A1**
(43) Date of publication of application: **11.03.2020**
(21) Application number: 19196225.7
(22) Date of filing: 09.09.2019
(51) Int. Cl.: G06Q 10/10, G09B 5/02, G09B 19/00, A63F 13/25

(54) **A SYSTEM AND A METHOD FOR ENTERTAINING PLAYERS OUTSIDE OF A VEHICLE**

(30) Priority: 10.09.2018 LU 100922
(71) Applicant: HELLA Saturnus Slovenija d.o.o., 1000 Ljubljana (SI)
(72) Inventor: Jezer ek, Nejc, 1230 Dom ale (SI); Krumpak, Matja, 3241 Podplat (SI); Wagner, Andrej, 1000 Ljubljana (SI); Virsek, Marko, 1290 Grosuplje (SI); Tekavcic , Andraz, 1000 Ljubljana (SI); Stante, Rok, 1000 Ljubljana (SI); Stajner, Tomaz, Ljubljana-Polje (SI)
(74) Representative: Zacco Patent- und Rechtsanwalts GmbH

(57) **Abstract**

A system (10) for entertaining players outside of a vehicle (11) comprises:
a display unit (13) configured to display entertaining content at a location outside of the vehicle (11),
a monitoring unit (14) configured to monitor traffic and/or a position of at least one player in the environment of the vehicle (11), and
a warning unit (15) configured to warn the players if the monitoring unit (14) detects a danger caused by traffic approaching the vehicle (11) or if the monitoring unit (14) detects that at least one player moves out of a predetermined area.

## Description

The invention concerns a system and a method for entertaining players outside of a vehicle.

During a long journey by car or any other vehicle passengers need to take a break from time to time and increase the blood circulation with a short physical activity. When the vehicle is parked in a parking space, the parking space can quickly turn into a playground. However, traffic approaching the vehicle can pose a danger to passengers and other persons, altogether hereinafter referred to as players, moving outside of the vehicle. Further, especially small children may be in danger if they wander away from the vehicle during a break.

It is an underlying object of the invention to provide a system for entertaining players outside of a vehicle, wherein the safety of the players is increased while being outside the vehicle. In addition, children shall be prevented to move away from the vehicle during a break. It is further an object of the invention to provide a method for entertaining players outside of a vehicle.

The object underlying the invention is satisfied by the features of the independent claims. Advantageous further developments and aspects of the invention are set forth in the dependent claims.

In a first aspect of the instant application a system for entertaining players outside of a vehicle is provided.

The system comprises a display unit, a monitoring unit and a warning unit. The display unit is configured to display entertaining content, for example a game, at a location outside of the vehicle. The monitoring unit can be configured to monitor traffic in the environment of the vehicle. Alternatively or additionally to monitoring traffic, the monitoring unit can be configured to monitor a position of at least one player in the environment of the vehicle. The warning unit is coupled to the monitoring unit and configured to warn the players if the monitoring unit detects traffic approaching the vehicle, in particular a danger caused by the traffic approaching the vehicle. In one embodiment, the warning unit warns the players if the monitoring unit detects a danger caused by the traffic approaching the vehicle and the display unit displays entertaining content at the same time. If the monitoring unit monitors the position of the at least one player in the environment of the vehicle, the warning unit can warn the players if at least one player moves out of a predetermined area.

The entertaining content may, for example, be an image of a game that can entertain the players outside the vehicle during a break. If the monitoring unit detects a danger for the players staying in the vicinity of the vehicle, the warning unit warns the players. Further, the entertaining content displayed outside the vehicle attracts the attention of children thus preventing them from wandering away during the break and keeping them distracted with physical activities. This significantly reduces the risks of accidents.

The monitoring unit may comprise one or more sensors, in particular proximity sensors, for monitoring the environment of the vehicle, for example, radar, ultrasound, laser and/or camera devices allowing to detect objects, in particular other vehicles, in the environment of the own vehicle. The sensors may already be installed in the vehicle for other advanced driver assistance systems (ADAS), for example, adaptive cruise control (ACC), automatic parking, lane change assistance (LCA), blind spot detection (BSD), emergency brake assistance (EBA) or autonomous driving. The sensors may be reused for the monitoring unit thus reducing the costs for implementing the system described herein.

The sensors provide information regarding the traffic in the environment of the vehicle, i.e., the area around the vehicle. The monitoring unit may analyze this information and may, in one embodiment, determine whether the distance of an approaching vehicle is equal to or smaller than a predetermined distance. If this is the case, the monitoring unit informs the warning unit accordingly. The warning unit then warns the players. In a further embodiment, the monitoring unit may predict whether the distance of an approaching vehicle will soon be equal to or smaller than a predetermined distance in order to decide whether a dangerous situation will arise. Further, the monitoring unit may monitor traffic approaching the area near the vehicle where the entertaining content is displayed. If the monitoring unit detects traffic that approaches the area near the vehicle where the entertaining content is displayed, the monitoring unit can inform the warning unit, which in turn generates a warning signal.

In one embodiment, the sensors provide information regarding the position(s) of one or more players staying in the environment of the vehicle. The monitoring unit analyzes this information and determines whether at least one player moves outside of a predetermined area, i.e., leaves the predetermined area, which can be, for example, a safe playground area for children. Thus, the monitoring unit can detect whether a child wanders away from a safe playground area near the vehicle. If the monitoring unit detects that the at least one player leaves the predetermined area near the vehicle where the entertaining content is displayed, the monitoring unit can inform the warning unit, which in turn generates a warning signal.

The predetermined area may include the area where the entertaining content is displayed. The predetermined area may have a predetermined size, such as, for example, 3m x 3m or any other size. Alternatively, the predetermined area may include all the area the monitoring unit is able to monitor. The monitoring unit may, for example, monitor only one special player in the predetermined area or a special group of players, such as children, or all players being within the predetermined area. If at least one of the monitored players leaves the predetermined area, the warning unit can be informed by the monitoring unit in order to generate the warning signal.

The system may be used when the vehicle is stationary or parked. In one embodiment, the display unit is configured to display the entertaining content only if the vehicle is stationary, i.e., the vehicle does not move, or the vehicle is in a parking position. Further, the warning unit may warn the players only if the vehicle is stationary or in a parking position.

The vehicle may be a car, a motorcycle, a truck, a bus, an aircraft, a helicopter or another transport means.

In one embodiment, in case the engine of the vehicle is started while the display unit displays entertaining content, for example a playground, then a warning sign, for example "Game over. Children get in the car immediately.", is displayed by the display unit, for example projected onto the ground next to the vehicle. Further, the display unit may stop displaying the entertaining content in this case. In addition, the driver of the vehicle may be warned by a warning signal that people are in the surrounding of the vehicle.

The display unit may comprise one or more projectors configured to project the entertaining content on a surface, in particular a ground surface, outside of the vehicle. In particular, the display unit may "throw" the entertaining content onto the road surface or the surface of a parking space next to the own vehicle. In addition, the display unit may display the entertaining content at other locations, for example, on one or more windows of the vehicle.

The projector (s) may be attached to the roof of the vehicle, one or more exterior mirror (s) and/or any other part of the vehicle body. It is also possible that the projector(s) is/are installed in the interior of the vehicle.

The predetermined area monitored by the monitor unit can be a certain area near the vehicle. The borders of the predetermined area may be invisible to the players. Alternatively, the projector(s) may project the predetermined area or the borders of the predetermined area on the ground surface so that the players know that a warning signal will be emitted if one of them leaves the predetermined area. In case the entertaining content, such as a game board or any other image, is projected onto the ground, the predetermined area may be set such that the entertaining content is included in the predetermined area. Further, the predetermined area can consists of the entertaining content projected on the ground and an additional frame around the entertaining content having a certain size. The frame can be visible to the players or, alternatively, can be invisible. A warning signal is generated only if one of the monitored players moves out of the frame.

The warning unit may be configured to generate an acoustic and/or visual warning signal and/or to send a warning alarm to a mobile device if the monitoring unit detects a danger caused by traffic approaching the vehicle or if the monitoring unit detects that the at least one player moves out of the predetermined area. The warning unit may use a loudspeaker to generate an acoustic warning signal that can be heard by the players staying outside the vehicle. For producing a visual warning signal the headlights, taillights and/or direction indicators of the vehicle and/or any other light source may be used. The acoustic and/or visual warning signal may also warn the drivers of vehicles approaching the own vehicle. A warning alarm may be sent to a mobile device, the phone number of which is stored in a memory of the warning unit. This may be helpful if parents do not see the playground outside the vehicle where children are playing. When one of the children moves away and leaves the predetermined area, the warning unit sends a warning message to the mobile phone of at least one of the parents.

The warning unit may be configured to generate an infrasound signal in the vehicle's surroundings as an acoustic warning signal. Infrasound is sound with the frequencies below human hearing, i.e., under 20 Hz. Humans cannot hear infrasound nor ultrasound, although humans can detect their presence by other means - like feeling the resonance of the air inside the lungs, resonance of the brain modulates higher sounds into hearable frequencies, etc. Experiments have shown that some people experience uneasy feeling, getting chills down the spine, nervousness and fear when exposed to 17 Hz infrasound. This phenomenon can be used to change the mood of the players on the secured playground or get their attention to warn them of upcoming danger.

Further, the warning unit may be configured to generate an acoustic warning signal in the vehicle's surroundings with frequencies higher than 15 kHz or 16 kHz or 17 kHz. In ages above 25 years, it is difficult to hear sound higher than 14400 Hz. Such sound may be used to gain the attention of young children playing with loud, high pitched notes only hearable by children.

The mobile device may, for example, be a mobile telephone, a key fob, a key of the vehicle or a mobile module, which is part of the system and which a user can take off and carry with him or her.

The warning unit may further be configured to change the content displayed by the display unit if the monitoring unit detects a danger caused by traffic approaching the vehicle or if the monitoring unit detects that the at least one player moves out of the predetermined area. For example, the warning unit may instruct the display unit in such a case to display a warning sign and/or message. Further, the entertaining content may disappear in case the monitoring unit detects danger by approaching traffic or by a player leaving the predetermined area.

The warning unit may further be configured to change the location and/or the size of the entertaining content displayed by the display unit if the monitoring unit detects a danger from approaching vehicles or if the monitoring unit detects that the at least one player moves out of the predetermined area. For example, before a danger arises, the entertaining content may be displayed on one side of the vehicle. Once the monitoring unit notices that another vehicle is approaching this side of the vehicle, for example, in order to park next to the own vehicle, the warning unit may instruct the display unit to display the entertaining content at another side of the vehicle and/or to decrease the size of the displayed image so that, for example, the image gets closer to the own vehicle. Also, the display unit may lead the players to the other side of the vehicle where the entertaining content is shown. For example, the entertaining content slowly moves around the vehicle to the new position and/or arrows or other indicators on the ground guide the players to the new position.

The display unit may be configured to display one or more static, dynamic and/or interactive image(s) of one or more game(s) at the location outside of the vehicle. For example, the display unit may project a static image of a game board, such as a chessboard, onto the road surface next to the vehicle. This allows two or more of the players to play a game together.

In addition, the system may comprise a controller, such as a computer, for controlling the images and games presented by the display unit. This allows to add game pieces, such as chess pieces, to the image presented by the display unit, wherein the players can move the game pieces by interaction. In this case, one or more players can play along with the computer or with each other.

The system may also interact with one or more display units arranged within the vehicle, thus enabling players sitting in the vehicle to play with players outside the vehicle. Further interfaces and communication modules may be provided, for example, for connecting with another vehicle or a mobile communication device, such as a tablet, a phone etc. In addition, the system may comprise modulated add-ons allowing further expansion for gaming interfaces.

The system may comprise an acoustic unit that is configured to emit acoustic signals to the outside of the vehicle and/or a fragrance dispensing unit that is configured to dispense fragrance to the outside of the vehicle. The acoustic unit may play additional sound effects and/or music to support the game displayed by the display unit and/or to warn the players in case of danger caused by approaching traffic or in case at least one player moves outside of the predetermined playground area. In addition, the sound generated by the acoustic unit and/or the fragrance dispensed by the fragrance dispensing unit can create a pleasant atmosphere for the players. It can also support the game features, for example a sweet flavored fragrance in case a player wins the game or a less appealing flavored fragrance in case a player loses a game or, for example, steps on an unwanted playing field.

In order to enable the players to interact with the entertaining content presented by the display unit, the system may comprise a detection unit configured to detect a position of a part of the body of a person and/or a gesture of a person. The detection unit can, for example, detect that a person intends to move a game piece or accessory by putting a part of the body, for example a foot, onto a field or space on the game board or by making a certain gesture. The display unit can then adapt the image of the game.

Further, a communication unit may be provided that is configured to send a warning signal to one or more other vehicles, in particular vehicles approaching the own vehicle, if the monitoring unit detects danger by approaching vehicles. The warning may be passed to the other vehicles by vehicle-to-everything (V2X) communication, in particular vehicle-to-vehicle communication (V2V) and/or vehicle-to-device communication (V2D). The communication unit can also send the warning alarm to the mobile device.

Multiple systems as described herein may be connected into a "cloud". For this purpose, the system may be configured to be coupled to a further system for entertaining players outside of a further vehicle, wherein the further system has the same features as the system disclosed herein. This allows the players to compete in different games projected inside the vehicles on game panels, on the road surface between the vehicles or nearby the vehicles or other projection surfaces. When the vehicles connected into a "cloud" are parked next to each other, the systems of the vehicles can interact with each other to create a larger playing field and allow participation of a large number of people.

According to a second aspect of the application, a vehicle comprises a system for entertaining players outside of a vehicle as described above.

According to a third aspect of the application, a method for entertaining players outside of a vehicle comprises the following steps:
- displaying entertaining content at a location outside of the vehicle,
- monitoring traffic and/or a position of at least one player in the environment of the vehicle, and
- warning the players if traffic approaching the vehicle is detected, in particular if a danger caused by traffic approaching the vehicle is detected, or if it is detected that the at least one player moves out of a predetermined area.

The method according to the third aspect of the application may comprise the embodiments disclosed above in connection with the system according to the first aspect of the application.

The invention will be described in more detail in the following in an exemplary manner with reference to embodiments and to the drawings. There are shown in these:
- Fig. 1: a schematic representation of a vehicle including a system for entertaining players outside of the vehicle;
- Fig. 2: a schematic representation of a rear view of the vehicle displaying entertaining content on the road surface;
- Figs. 3A and 3B: schematic representations of a top view of the vehicle when another vehicle is approaching;
- Fig. 4: a schematic representation of a top view of two vehicles parking next to each other and connected to each other; and
- Figs. 5A to 5G: schematic representations of examples of games projected onto a surface.

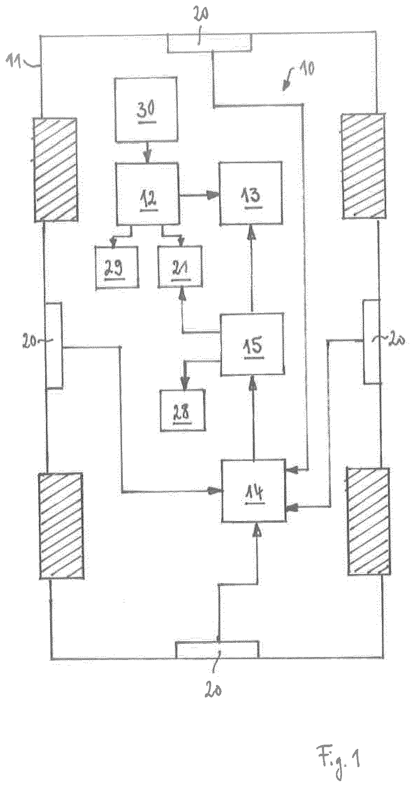

Fig. 1 schematically illustrates a system 10 for entertaining players outside of a vehicle 11. The system 10 is installed in the vehicle 11.

The system 10, the vehicle 11 and the method performed by the system 10 as described in the following are exemplary embodiments according to the first, second and third aspect of the application, respectively.

The system 10 includes a controller 12, a display unit 13, a monitoring unit 14 and a warning unit 15.

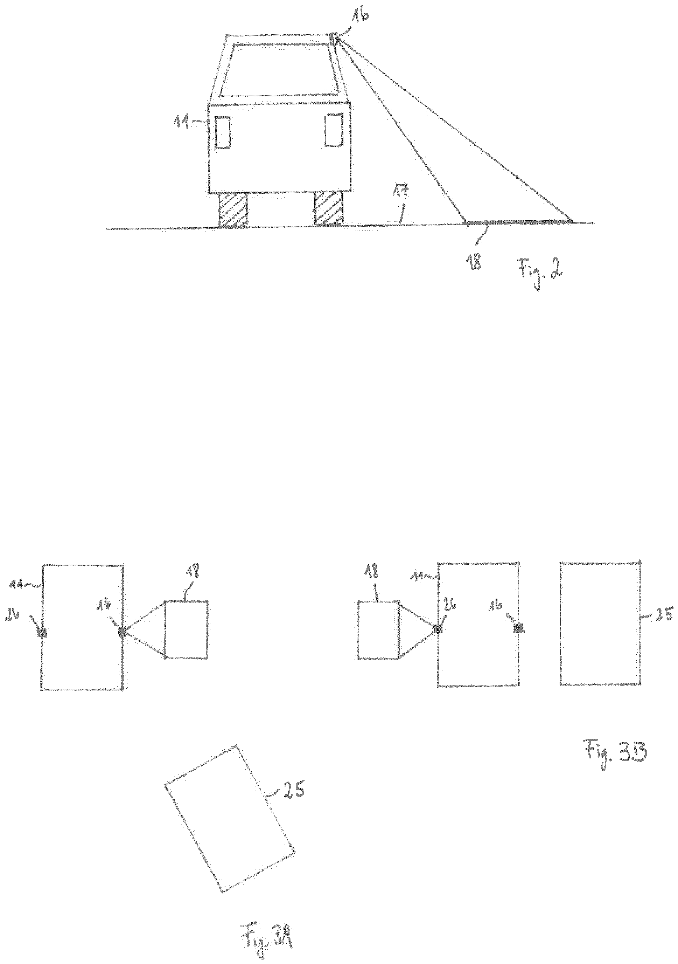

The controller 12 provides entertaining content to the display unit 13, which displays the entertaining content at a location outside of the vehicle 11. The display unit 13 may display the entertaining content only if the vehicle 11 is stationary or in a parking position. The display unit 13 includes one or more projectors 16 that project the entertaining content on a road surface 17 next to the vehicle 11 as schematically illustrated in Fig. 2. The entertaining content is, for example, an image 18 of a game.

One or more sensors 20 are mounted on the vehicle 11. The sensors 20 are directed to areas in the front, in the rear and at the sides of the vehicle 11. The sensors 20 can be radar, ultrasound, laser and/or camera devices allowing to detect objects, in particular other vehicles, and persons in the environment of the vehicle 11.

Data recorded by the sensors 20 about stationary and moving objects and/or players in the environment of the vehicle 11 are provided to the monitoring unit 14. The monitoring unit 14 monitors the traffic in the environment of the vehicle 11. If the monitor unit 14 detects a danger caused by another vehicle approaching the vehicle 11, the monitoring unit 14 informs the warning unit 15 accordingly, which in turn creates a warning signal in order to warn the players that there might arise a dangerous situation caused by the other vehicle. The warning unit 15 may warn the players if the monitoring unit 14 detects a danger caused by the traffic approaching the vehicle 11 and the display unit 13 displays the entertaining content at the same time.

Further, the monitoring unit 14 monitors a position of at least one player in the environment of the vehicle 11. If the monitoring unit 14 detects that the at least one player leaves a predetermined area in the vicinity of the vehicle 11, the monitoring unit 14 informs the warning unit 15 and the warning unit 15 generates a warning signal.

The warning unit 15 can instruct an acoustic unit 21 to emit an acoustic warning signal to the outside of the vehicle 11 in order to warn against the approaching traffic or that a player is leaving or has left the predetermined area. For example, the warning unit 15 emits an infrasound signal and/or a signal with frequencies higher than 15 kHz or 16 kHz or 17 kHz. Further, the warning unit 15 can control the display unit 13 and/or the controller 12 such that the display unit 13 displays a warning sign or message. Alternatively, the entertaining content displayed by the display unit 13 can disappear once the warning unit 15 has sent the warning signal to the display unit 13 and/or the controller 12.

Further, the location or the size of the content displayed by the display unit 13 can be changed if the display unit 13 and/or the controller 12 receive the warning signal from the warning unit 15. Such a situation is schematically illustrated in Figs. 3A and 3B.

In Fig. 3A the vehicle 11 is parked in a parking space and an image 18 of a game is projected by the projector 16 onto the ground surface next to the vehicle 11. Further, the sensors 20 of the vehicle 11 detect a vehicle 25 approaching the vehicle 11, and the monitoring unit 14 analyzes the data provided by the sensors 20. Based on its analysis the monitoring unit 14 predicts that the vehicle 25 will park in the parking space next to the vehicle 11 and sends a signal to the warning unit 15 in order to inform the warning unit 15 accordingly.

Upon receipt of the message from the monitoring unit 14 the warning unit 15 controls the display unit 13 and/or the controller 12 such that the image 18 displayed by the projector 16 is switched to the other side of the vehicle 11 (or any other location) as illustrated in Fig. 3B. Further, the image 18 can move slowly to the new position in order to guide players safely to the new position of the image 18. Moreover, indicators, such as arrows, projected by the projector 16 on the ground may guide the players to the new position of the image 18. On the other side of the vehicle 11 there is a further projector 26, which can project the image 18 onto the ground. Alternatively, it is also possible that the projector 16 continues to project the image 18, but the size of the image 18 is decreased so that it fits into the space between the vehicles 11 and 25.

In case a communication unit 28 is installed in the vehicle 11 as shown in Fig. 1, the warning unit 15 can send a warning signal to one or more other vehicles, in particular the vehicle 25 approaching the vehicle 11. The communication unit 28 can also sent a warning alarm to a mobile phone of parents if one child leaves the predetermined area.

The system 10 illustrated in Fig. 1 further includes a fragrance dispensing unit 29 and a detection unit 30. The fragrance dispensing unit 29 can dispense fragrance in order to create a pleasant atmosphere for the players when spending time outside of the vehicle 11 or can support game features for the players. The detection unit 30 can detect a position of a part of the body of a person and/or a gesture of a person. This allows a player to interact with the game displayed by the display unit 13. The detection unit 30 can, for example, use one or more of the sensors 20 installed in the vehicle 11.

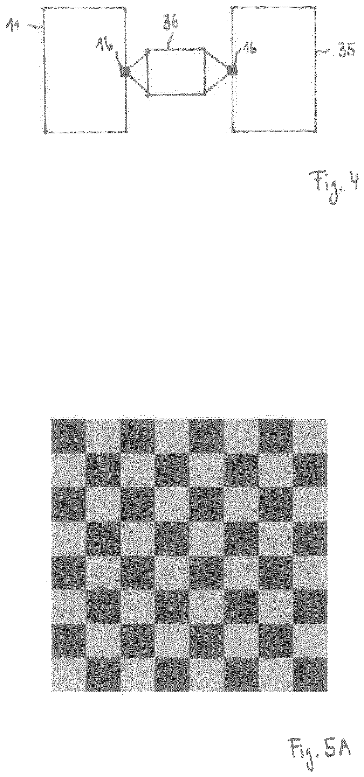

In Fig. 4 a vehicle 35 is parked next to the vehicle 11. Both vehicles 11, 35 are equipped with a respective system 10 for entertaining players outside of a vehicle as illustrated in Fig. 1. The systems 10 of the vehicles 11, 35 are coupled to each other, for example, by being connected into a "cloud" and can interact with each other. As shown in Fig. 4, the projectors 16 of both vehicles 11, 35 are used to create a larger image 36 of a game between the vehicles 11, 35 thereby, for example, enabling a large number of people to participate in the game.

Figs. 5A to 5G illustrate examples of games that could be projected onto a surface by the system 10.

Fig. 5A shows a chessboard as an example of a game board that can be projected onto the ground outside the vehicle 11 so that people can play a game during a break.

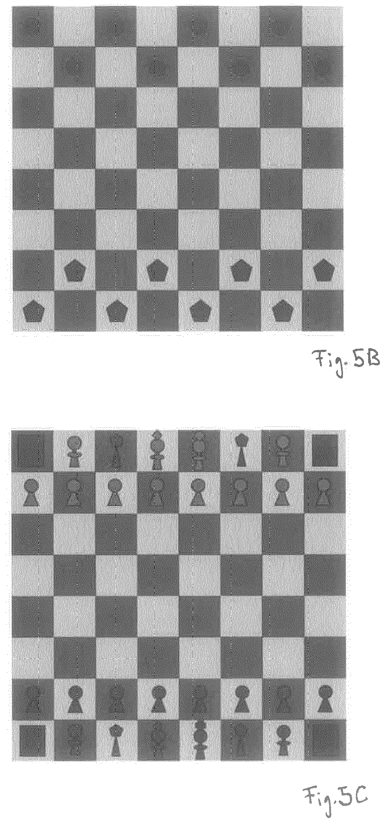

Figs. 5B and 5C show games of checkers and chess, respectively. Two players can play against each other or only one player can play along with a software that can be installed in the controller 12. For moving the game pieces on the game board, the players can make certain gestures that are detected by the detection unit 30, which then informs the control unit 12 that a game piece should be moved to a certain field. Alternatively, voice commands by the players can be recorded to move the game pieces to certain fields.

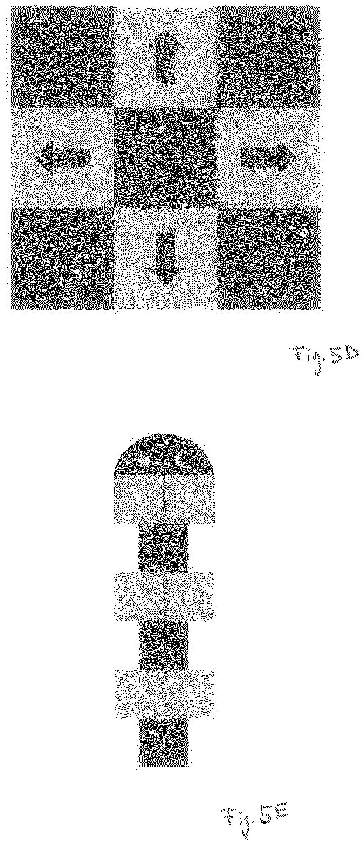

Fig. 5D shows an example of a dance floor projection. The dance floor includes dynamic arrows indicating the field a participant should step on.

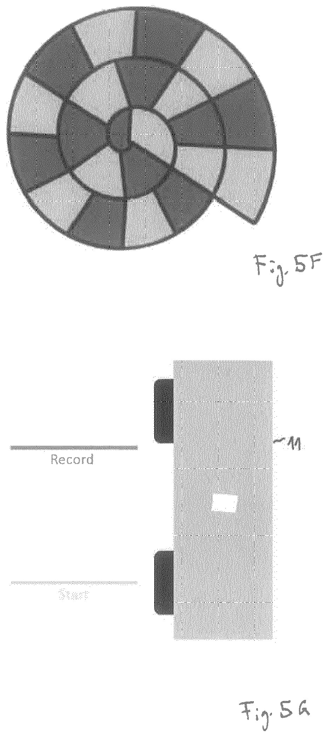

Fig. 5E shows a stationary image of the game hopscotch. Fig. 5F shows a snail hopscotch pattern. The games presented by the system 10 can also include interactive components. For example, a player can mark one or more of the fields in the hopscotch pattern, which can be recorded by the detection unit 30. When another player then hops through the course, he has to skip the marked field(s).

Fig. 5G shows an example of a long jump competition, wherein the projector 16 projects a start line onto the ground. Further, the system 10 can track the record by means of the detection unit 30.

The game Chinese jump rope, also known as Chinese ropes, jumpsies or elastics, is another example of a game that can be presented by the system 10. In this case, one or more light beams can be generated indicating the virtual position of a rope and a deflection/reflection of the light beam(s) can be measured when a participant comes into contact with the light beam(s). The light beams can also generate a virtual net for games with balls, such as badminton, tennis etc.

### LIST OF REFERENCE NUMERALS

- 10: system
- 11: vehicle
- 12: controller
- 13: display unit
- 14: monitoring unit
- 15: warning unit
- 16: projector
- 17: road surface
- 18: image
- 20: sensor
- 21: acoustic unit
- 25: vehicle
- 26: projector
- 28: communication unit
- 29: fragrance dispensing unit
- 30: detection unit
- 35: vehicle
- 36: image

## Claims

1. A system (10) for entertaining players outside of a vehicle (11), comprising:
a display unit (13) configured to display entertaining content at a location outside of the vehicle (11),
a monitoring unit (14) configured to monitor traffic and/or a position of at least one player in the environment of the vehicle (11), and
a warning unit (15) configured to warn the players if the monitoring unit (14) detects a danger caused by traffic approaching the vehicle (11) or if the monitoring unit (14) detects that at least one player moves out of a predetermined area.

2. The system (10) as claimed in claim 1, wherein the display unit (13) comprises at least one projector (16) configured to project the entertaining content on a surface (17) outside of the vehicle (11).

3. The system (10) as claimed in claim 1 or 2, wherein the warning unit (15) is configured to generate an acoustic and/or visual warning signal and/or to send a warning alarm to a mobile device, if the monitoring unit (14) detects a danger caused by traffic approaching the vehicle (11) or if the monitoring unit (14) detects that at least one player moves out of the predetermined area.

4. The system (10) as claimed in one of the preceding claims, wherein the warning unit (15) is configured to change the content displayed by the display unit (13) if the monitoring unit (14) detects a danger caused by traffic approaching the vehicle (11) or if the monitoring unit (14) detects that at least one player moves out of the predetermined area.

5. The system (10) as claimed in one of the preceding claims, wherein the warning unit (14) is configured to change the location and/or the size of the content displayed by the display unit (13) if the monitoring unit (14) detects a danger caused by traffic approaching the vehicle (11) or if the monitoring unit (14) detects that at least one player moves out of the predetermined area.

6. The system (10) as claimed in one of the preceding claims, wherein the display unit (13) is configured to display one or more static, dynamic and/or interactive image(s) (18) of one or more game(s) at the location outside of the vehicle (11).

7. The system (10) as claimed in one of the preceding claims, further comprising:
an acoustic unit (21) configured to emit acoustic signals to the outside of the vehicle (11), and/or
a fragrance dispensing unit (29) configured to dispense fragrance to the outside of the vehicle (11).

8. The system (10) as claimed in one of the preceding claims, further comprising a detection unit (30) configured to detect a position of a part of the body of a person and/or a gesture of a person.

9. The system (10) as claimed in one of the preceding claims, further comprising a communication unit (28) configured to send a warning signal to one or more other vehicles (25) if the monitoring unit (14) detects a danger caused by traffic approaching the vehicle (11) or if the monitoring unit (14) detects that at least one player moves out of a predetermined area.

10. The system (10) as claimed in one of the preceding claims, wherein the system (10) is configured to be coupled to a further system for entertaining players outside of a further vehicle (35), wherein the further system comprises a further display unit configured to display entertaining content at a location outside of the further vehicle (35) .

11. A vehicle (11) comprising a system (10) for entertaining players outside of a vehicle (11) as claimed in one of the preceding claims.

12. The vehicle (11) as claimed in claim 11, wherein the vehicle (11) is a car, a motorcycle, a truck, a bus, an aircraft, a helicopter or another transport means.

13. A method for entertaining players outside of a vehicle (11), comprising:
displaying entertaining content at a location outside of the vehicle (11),
monitoring traffic and/or a position of at least one player in the environment of the vehicle (11), and
warning the players if a danger caused by traffic approaching the vehicle (11) is detected or if at least one player moves out of a predetermined area.

14. The method as claimed in claim 13, wherein the entertaining content is displayed by projecting the entertaining content on a surface (17) outside of the vehicle (11).

15. The method as claimed in claim 13 or 14, wherein if a danger caused by traffic approaching the vehicle (11) is detected or if at least one player moves out of a predetermined area,
an acoustic and/or visual warning signal is generated and/or a warning alarm is sent to a mobile device, and/or the content displayed at the location outside the vehicle (11) is changed, and/or
the location and/or the size of the content displayed outside the vehicle (11) is changed.
